# EUROPÄISCHE PATENTSCHRIFT

(11) **EP 2 774 739 B1**
(45) Veröffentlichungstag und Bekanntmachung des Hinweises auf die Patenterteilung: **31.05.2023**
(21) Anmeldenummer: 14150516.4
(22) Anmeldetag: 09.01.2014
(51) Int. Cl.: B29C 35/02, C08J 3/28, C08J 3/24, B29D 30/52, B29C 43/22, B29C 35/10, B29C 35/08

(54) **Verfahren und Vorrichtung zur Vulkanisation eines Artikels**
Method and device for vulcanising a item
Procédé et dispositif de vulcanisation d'un article

(30) Priorität: 05.03.2013 DE 102013102148
(43) Veröffentlichungstag der Anmeldung: 10.09.2014
(73) Patentinhaber: ContiTech Elastomer-Beschichtungen GmbH, 30165 Hannover (DE)
(72) Erfinder: Zahel, Helge, 37154 Northeim (DE); Stampfer, Bernd, 37154 Northeim (DE); Löschner, Jens, 37120 Bovenden (DE); Fleck, Andreas, 30827 Garbsen (DE)
(74) Vertreter: Continental Corporation

(56) Entgegenhaltungen:
- EP-A2- 0 315 927
- WO-A1-2010/105283
- DE-A1- 10 119 809
- FR-A1- 2 025 179

## Beschreibung

Die Erfindung betrifft ein Verfahren und eine Vorrichtung zur Vulkanisation eines ein- oder mehrschichtigen Artikels, welcher wenigstens eine Schicht auf Basis wenigstens eines Kautschuks enthält.

Mehrschichtige Artikel auf der Basis von kautschukhaltigen Verbundwerkstoffen enthalten beschichtete Festigkeitsträger oder bestehen aus beschichteten Festigkeitsträgern. Es handelt sich hierbei beispielsweise um beschichtete Festigkeitsträger, die eingesetzt werden, um zum Beispiel Schutzanzüge, Rettungsinseln, Faltenbälge, Sportboote, Drucktücher, Membranstoffe, Membranen, Fördergurte schlauchförmige Körper und flexible Behälter zu konfektionieren.

Diese mehrschichtigen Artikel sind zumeist flächenförmig und bestehen im Wesentlichen aus einem zumeist beidseitig mit einem Polymer beschichteten textilen Flächengebilde. Bei einschichtigen Artikeln handelt es sich um Platten aus wenigstens einem Polymerwerkstoff.

Zur Vulkanisation derartiger mehrschichtiger Artikel sind verschiedene Verfahren mit und ohne Druckeinwirkung während der Vulkanisation bekannt. Drucklose Vulkanisationsverfahren sind u.a. Heißluft- oder Strahlungsvulkanisation oder auch die Vulkanisation mit Hilfe von Mikrowellen. Die drucklosen Vulkanisationsverfahren haben allerdings den Nachteil, dass es während der Vulkanisation zu einer Blasenbildung kommen kann, die nicht nur das optische oberflächliche Erscheinungsbild des Artikels negativ beeinflusst, sondern vor allem die physikalischen Eigenschaften des Artikels stark beeinträchtigt. Zur Vermeidung von Blasen, für die Haftung der einzelnen Schichten miteinander und zur Ausbildung einer definierten Oberfläche werden daher oft Vulkanisationsverfahren unter Druck herangezogen.

Eines hiervon ist das sogenannte Rotationsvulkanisationsverfahren, bei denen endlose Artikel mit geringeren Dicken, meist unter 10 mm, unter permanentem Druck kontinuierlich hergestellt werden können. Die entsprechenden Vorrichtungen hierfür werden als automatische Vulkanisationsmaschine, "AUMA", oder als Rotocure bezeichnet. Die Herstellung von Laufflächen für Fahrzeugluftreifen und / oder von Bodenbelägen mittels einer AUMA wird bspw. in DT 18 02 085 B2, DE 36 20 067 A1 oder in DE 26 55 025 C2 beschrieben. Die DE 26 55 025 D2 offenbart ein Verfahren gemäß dem Oberbegriff des Anspruchs 1 und eine Vorrichtung gemäß dem Oberbegriff des Anspruchs 2.

Das Rotationsvulkanisationsverfahren ist sehr zeit- und energieintensiv. Zusätzlich treten auf den Artikeloberflächen Ungleichmäßigkeiten auf, die die physikalischen Eigenschaften des Artikels negativ beeinträchtigen, hervorgerufen durch die maschinenbedingte ungleichmäßige Vernetzung, die maschinell nicht ausgeglichen werden können.

Der Erfindung liegt nun die Aufgabe zu Grunde, ein Verfahren zur Vulkanisation eines ein- oder mehrschichtigen Artikels, welcher wenigstens eine Schicht auf Basis wenigstens eines Kautschuks enthält, bereitzustellen, dass sich durch eine Erhöhung der Produktionsgeschwindigkeit, durch eine Energieeinsparung und durch eine gleichmäßige Vernetzung auszeichnet.

Gelöst wird diese Aufgabe durch ein Verfahren gemäß Anspruch 1 und eine Vorrichtung gemäß Anspruch 2. Das erfindungsgemäße Verfahren kann hierbei noch weitere Verfahrensschritte enthalten.

Während der Vulkanisation von Kautschuk sind zwei Phasen charakteristisch. Die erste Phase wird als plastische Fließphase bezeichnet. Hierbei beginnt der Kautschuk bzw. die Kautschukmischung oft unter Einwirkung eines Pressdruckes zu fließen. Im Rahmen einer Anvulkanisation können sich erste Vernetzungsreaktionen zeigen. Im weiteren Verlauf der Vulkanisation steigert sich der Vernetzungsgrad. Im Rahmen der Ausvulkanisation verbindet sich ein Großteil des eingesetzten Vernetzungsmittels, bspw. Schwefel bei einer Schwefelvernetzung, Peroxide bei einer peroxidischen Vernetzung, mit dem Kautschuk. Im weiteren Verlauf verlangsamt sich die Reaktion.

Überraschenderweise hat sich gezeigt, dass sich durch das Vorhandensein der wenigstens zwei flächigen Strahlungsquellen, die jeweils die Ober- und die Unterseite des ein- oder mehrschichtigen Artikels bestrahlen, eine besonders gute gleichmäßige Vernetzung ohne Blasenbildung erzielen lässt. Durch die Kombination von druckbeaufschlagter und druckloser Vulkanisation wird die effektive Heizstrecke deutlich verlängert, wodurch eine Steigerung der Produktionsgeschwindigkeit auf das Zwei- bis Dreifache möglich wird. Durch die Möglichkeit der Isolierung der beiden Strahlungsquellen, welche eine drucklose Nachheizstrecke bilden, wird die Gesamtenergiebilanz der effektiven Heizstrecke deutlich verbessert. Durch eine geschickte Anordnung der Temperierzonen innerhalb der beiden Strahlungsquellen können Ungleichmäßigkeiten im Vernetzungsgrad der beiden Artikelseiten ausgeglichen werden. Die beiden Artikelseiten können quantitativ und / oder qualitativ unterschiedlich ausgebildet sein.

Erfindungsgemäß wird zur Durchführung des ersten Verfahrensschrittes eine Rotationsvulkanisationseintheit ("AUMA") verwendet.

Als Strahlungsquellen, welche im zweiten Verfahrensschritt benötigt werden, werden Dunkelstrahler verwendet. Der Begriff Dunkelstrahler beschreibt einen Infrarotstrahler, der langwellige Strahlung im nicht sichtbaren Bereich emittiert. Dunkelstrahler arbeiten bei einer Wellenlänge von 1µm bis 20µm. Bevorzugt wird jedoch der Bereich zwischen 5 und 15µm eingesetzt, da die Absorptionsfähigkeit vieler Elastomere in diesem Bereich sehr hoch ist.

Aufgrund der hohen Absorption ergibt sich eine gute Energieausnutzung.

Die einzelnen Strahlungsquellen können hierbei unabhängig voneinander eingestellt werden. Dies ist von Vorteil, wenn die Ober- und die Unterseite des mehrschichtigen Artikels jeweils voneinander verschiedene Kautschuke enthalten, da so der Energieeintrag und die Vernetzung je Artikelseite gezielt gesteuert werden können. Dies ist oft notwendig, um die ungleichmäßige Vulkanisation der AUMA-Einheit unter Druck auszugeichen.

Die Strahlungsquellen sind flächig, bevorzugt rechteckig, ausgebildet. Der Querschnitt einer Strahlungsquelle beträgt bevorzugt 85 mal 180 cm (0,85 x 1,80 m).

Die Strahlungsquellen sind im Anschluss an die AUMA-Einheit als drucklose Nachheizstrecke angeordnet. Die Nachheizstrecke, enthaltend die Strahlungsquellen, kann hierbei vertikal oder horizontal zur AUMA-Einheit angeordnet sein. Eine Kopplung mit einer Beschichtungsanlage ist ebenso möglich. Die drucklose Nachheizstrecke kann exemplarisch mit einem Kalander kombiniert werden, um inline Bahnwaren zu beschichten und zu vulkanisieren. Dies kann ebenso mit einer Streichmaschine erfolgen.

Der mehrschichtige Artikel enthält wenigstens eine Schicht auf der Basis wenigstens eines Kautschuks. Als Kautschukkomponenten sind insbesondere zu nennen: Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Poyurethan (PU).

Auch der Einsatz eines Verschnittes, insbesondere in Verbindung mit einem der vorgenannten Kautschuktypen, beispielsweise ein NR/BR-Verschnitt, ist möglich.

Von besonderer Bedeutung, insbesondere für Faltenbälge, sind CSM, EPDM, oder Silikonkautschuk.

Besonders gut geeignet hat sich das erfindungsgemäße Verfahren für Kautschuktypen gezeigt, die peroxidisch vernetzt werden, d.h. die keine Doppelbindungen in der Hauptkette aufweisen, wie bspw. HNBR; EPM, EPDM, CR, FKM; MQ, VMQ, PVMQ, FVMQ, MFQ, EVA; ACM und AEM.

Der erfindungsgemäße ein- oder mehrschichtige Artikel kann beschichtete Festigkeitsträger enthalten oder aus beschichteten Festigkeitsträgern bestehen. Es handelt sich hierbei um beschichtete Festigkeitsträger, die eingesetzt werden, um zum Beispiel Schutzanzüge, Rettungsinseln, Faltenbälge, Sportboote, Drucktücher, Membranstoffe, Membranen, Fördergurte schlauchförmige Körper und flexible Behälter zu konfektionieren.

Die Erfindung wird nun anhand einer Figur näher erläutert.

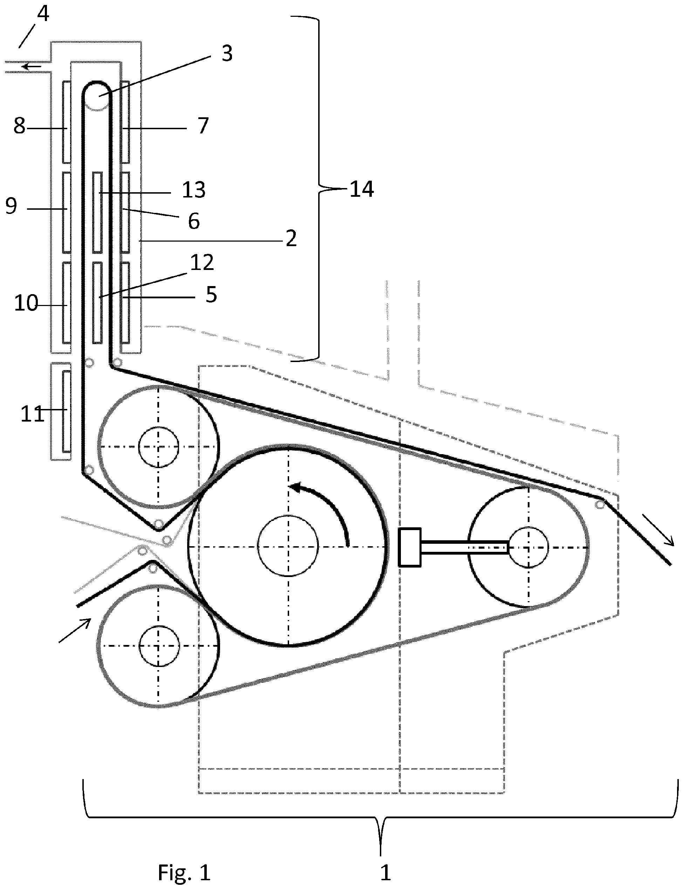

Fig.1 zeigt einen Längsschnitt durch eine zur Durchführung des erfindungsgemäßen Verfahrens benötigte Vorrichtung. Zu sehen ist eine AUMA-Einheit 1, mit einer sich im Anschluss daran befindlichen Nachheizstrecke 14, die erfindungsgemäß wenigstens zwei flächige Strahlungsquellen 5, 6, 7, 8, 9, 10, 11, 12, 13 aufweist, mit der beide Artikelseiten bestrahlt werden können. Die Nachheizstrecke 14 enthält weiterhin wenigstens eine Umlenkrolle 3, wenigstens eine Paternosterrolle 2 und wenigstens eine möglichst regelbare Absaugung 4. Die flächige Strahlungsquelle 11 befindet sich hierbei am Auslauf der AUMA 1 und ist gegebenenfalls klappbar. Die flächigen Strahlungsquellen 12 und 13 befinden sich im Inneren der Nachheizstrecke 14 und können die Strahlung bei Bedarf in alle Richtungen abgeben. Die einzelnen flächigen Strahlungsquellen 5, 6, 7, 8, 9, 10, 11, 12, 13 können gleich oder verschieden voneinander sein und können während des Verfahrens mit gleicher oder unterschiedlicher Strahlungsenergie eingestellt werden. Bevorzugt handelt es sich bei den Strahlungsquellen um Dunkelstrahler mit einem Flächenquerschnitt von 0,85 x 1,80 m. Die Strahlungsquellen liegen mit ihrer längeren Achse dabei horizontal, so dass die Vorrichtung für die Vulkanisation breiterer Artikel geeignet ist. Somit kann für den jeweiligen Artikel die optimale Vernetzung erzielt werden. In Fig 1. Ist die Nachheizstrecke 14 vertikal zur AUMA 1 angeordnet. Eine horizontale Anordnung der Nachheizstrecke ist aber ebenso möglich.

### Bezugszeichenliste (Teil der Beschreibung)

- 1: Rotationsvulkanisationseinheit AUMA
- 14: Nachheizstrecke
- 2: Paternosterrollen
- 3: Umlenkrolle
- 4: Absaugung, regelbar
- 5: Strahlungsquelle, außen
- 6: Strahlungsquelle, außen
- 7: Strahlungsquelle, außen
- 8: Strahlungsquelle, außen
- 9: Strahlungsquelle, außen
- 10: Strahlungsquelle, außen
- 11: Strahlungsquelle, an AUMA-Auslauf, ggf. klappbar
- 12: Strahlungsquelle, innen
- 13: Strahlungsquelle, innen

## Patentansprüche

1. Verfahren zur Vulkanisation eines einschichtigen oder mehrschichtigen Artikels, welcher wenigstens eine Schicht auf Basis wenigstens eines Kautschuks enthält, wobei die plastische Fließphase des Kautschuks des einschichtigen oder mehrschichtigen Artikels unter Druck in einem ersten Verfahrensschritt mittels einer Rotationsvulkanisationseinheit (1) und die Vernetzungsphase des Kautschuks des einschichtigen oder mehrschichtigen Artikels ohne Druck in einem zweiten Verfahrensschritt erfolgt, wobei während der drucklosen Vernetzungsphase wenigstens zwei Strahlungsquellen (5,6,7,8,9,10,11,12,13) eingesetzt werden, die jeweils die Oberseite und die Unterseite des einschichtigen oder mehrschichtigen Artikels bestrahlen, **dadurch gekennzeichnet, dass** die Strahlungsquellen (5,6,7,8,9,10,11,12,13) des zweiten Verfahrensschrittes als flächige Dunkelstrahler ausgebildet sind.

2. Vorrichtung zur Vulkanisation eines einschichtigen oder mehrschichtigen Artikels, welcher wenigstens eine Schicht auf Basis wenigstens eines Kautschuks enthält, wobei die Vorrichtung eine Rotationsvulkanisationseinheit (1) und eine Nachheizstrecke (14) enthält, wobei die Nachheizstrecke (14) wenigstens zwei Strahlungsquellen (5,6,7,8,9,10,11,12,13) enthält, die jeweils die Oberseite und die Unterseite des einschichtigen oder mehrschichtigen Artikels bestrahlen, **dadurch gekennzeichnet, dass** die Strahlungsquellen (5,6,7,8,9,10,11,12,13) als flächige Dunkelstrahler ausgebildet sind.

## Claims

1. Process for vulcanization of a single-layered or multi-layered article containing at least one layer based on at least one rubber, wherein the plastic flow phase of the rubber of the single-layered or multi-layered article is carried out under pressure in a first process step using a rotary vulcanization unit (1) and the crosslinking phase of the rubber of the single-layered or multi-layered article is carried out pressurelessly in a second process step, wherein during the pressureless crosslinking phase at least two radiation sources (5, 6, 7, 8, 9, 10, 11, 12, 13) are employed which respectively irradiate the upper surface and the lower surface of the single-layered or multi-layered article, **characterized in that** the radiation sources (5, 6, 7, 8, 9, 10, 11, 12, 13) of the second process step are in the form of flat dark emitters.

2. Apparatus for vulcanization of a single-layered or multi-layered article containing at least one layer based on at least one rubber, wherein the apparatus contains a rotary vulcanization unit (1) and a post-heating zone (14), wherein the post-heating zone (14) contains at least two radiation sources (5, 6, 7, 8, 9, 10, 11, 12, 13) which respectively irradiate the upper surface and the lower surface of the single-layered or multi-layered article, **characterized in that** the radiation sources (5, 6, 7, 8, 9, 10, 11, 12, 13) are in the form of flat dark emitters.

## Revendications

1. Procédé de vulcanisation d'un article monocouche ou multicouche qui contient au moins une couche à base d'au moins un caoutchouc, la phase d'écoulement plastique du caoutchouc de l'article monocouche ou multicouche étant effectuée sous pression dans une première étape de procédé au moyen d'une unité de vulcanisation à rotation (1) et la phase de réticulation du caoutchouc de l'article monocouche ou multicouche étant effectuée sans pression dans une deuxième étape de procédé, au moins deux sources de rayonnement (5, 6, 7, 8, 9, 10, 11, 12, 13), qui irradient chacune le côté supérieur et le côté inférieur de l'article monocouche ou multicouche, étant utilisées pendant la phase de réticulation sans pression, **caractérisé en ce que** les sources de rayonnement (5, 6, 7, 8, 9, 10, 11, 12, 13) de la deuxième étape de procédé sont conçues sous la forme de radiateurs obscurs sensiblement bidimensionnels.

2. Dispositif de vulcanisation d'un article monocouche ou multicouche qui contient au moins une couche à base d'au moins un caoutchouc, le dispositif contenant une unité de vulcanisation à rotation (1) et une section de post-chauffage (14), la section de post-chauffage (14) contenant au moins deux sources de rayonnement (5, 6, 7, 8, 9, 10, 11, 12, 13) qui irradient chacune le côté supérieur et le côté inférieur de l'article monocouche ou multicouche stratifié, **caractérisé en ce que** les sources de rayonnement (5, 6, 7, 8, 9, 10, 11, 12, 13) sont réalisées sous la forme radiateurs obscurs sensiblement bidimensionnels.
